# EUROPÄISCHE PATENTANMELDUNG

(11) **EP 1 331 238 A2**
(43) Veröffentlichungstag der Anmeldung: **30.07.2003**
(21) Anmeldenummer: 03000913.8
(22) Anmeldetag: 16.01.2003
(51) Int. Cl.: C08G 77/06, C08G 77/04, C08G 77/20, C09D 183/04

(54) **Gemisch kettenförmiger und cyclischer Siloxanoligomerer, dessen Herstellung und dessen Verwendung**

(30) Priorität: 23.01.2002 DE 10202389; 30.08.2002 DE 10240754
(71) Anmelder: Degussa AG, 40474 Düsseldorf (DE)
(72) Erfinder: Barfurth, Dieter, 79618 Rheinfelden (DE); Mack, Helmut, Dr., 79618 Rheinfelden (DE)

(57) **Zusammenfassung**

Die vorliegende Erfindung betrifft ein Gemisch sowie ein Verfahren zur Herstellung eines Gemischs kettenförmiger und cyclischer Siloxane der allgemeinen Formel I

R₃Si-O-[SiR₂-O-]ₘSiR₃ (I)

und cyclischer Siloxane der allgemeinen Formel II 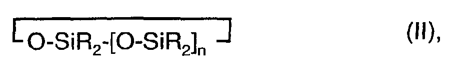 worin m eine ganze Zahl von 0 bis 40 und n eine ganze Zahl von 2 bis 40 sind, Gruppen R gleich oder verschieden sind, R für eine organofunktionelle Gruppe aus der Reihe Alkyl, Aryl, Vinyl oder Alkoxy steht und pro Siliciumatom höchstens eine Vinyl- oder Aryl-Gruppe vorliegt,
welches durch eine gezielte Hydrolyse, Kondensation oder Cokondensation mindestens eines monomeren Silans in alkoholischer Lösung in Gegenwart eines sauren Katalysators erhalten wird,
wenn man (i) mindestens ein Arylchlorsilan oder (ii) ein Gemisch von mindestens zwei Chlorsilanen gemäß Alkylchlorsilan und Arylchlorsilan, Arylchlorsilan und Vinylchlorsilan, Alkylchlorsilan und Vinylchlorsilan, Arylchlorsilan und Vinylchlorsilan und Alkylchlorsilan oder (iii) in zwei oder mehreren getrennten Ansätzen mindestens eine Chlorsilankomponente einsetzt, unter Zusatz von Alkohol und Wasser umsetzt und bezüglich (iii) mindestens zwei der jeweilig erhaltenen Gemische kettenförmiger und cyclischer Siloxane zusammenbringt.

Ferner betrifft die vorliegende Erfindung die Verwendung solcher Gemische.

## Beschreibung

Die vorliegende Erfindung betrifft ein Gemisch kettenförmiger Alkoxysiloxane der allgemeinen Formel R₃Si-O-[SiR₂-O-]ₘSiR₃ sowie cyclischer Alkoxysiloxane der allgemeinen Formel -O-SiR₂-[O-SiR₂]ₙ-, nachfolgend werden besagte Alkoxysiloxane auch kurz als Siloxane bzw. Siloxanoligomere bezeichnet, worin m und n eine ganze Zahl sind, Gruppen R gleich oder verschieden sind, R für Alkyl, Aryl, Vinyl oder Alkoxy steht und pro Siliciumatom höchstens eine Vinyl-Gruppe trägt, welches durch eine gezielte Hydrolyse, Kondensation bzw. Cokondensation monomerer Silane in alkoholischer Lösung in Gegenwart eines sauren Katalysators erhalten wird. Ferner betrifft die vorliegende Erfindung ein Verfahren zur Herstellung besagter Gemische und deren Verwendung.

Organo-/Vinyl-funktionelle Alkoxysiloxane werden beispielsweise als Vernetzer für thermoplastische Polyolefine verwendet. Die Anforderungen an die Leistungsfähigkeit solcher Produkte sind heute sehr hoch und es besteht ein hoher Bedarf für ganz speziell abgestimmte Problemlösungen.

Es ist bekannt, dass man ein 1,3-Divinyltetramethoxydisiloxan, das mit höheren Polymeren verunreinigt ist, bei der destillativen Aufarbeitung von rohem Vinyltrimethoxysilan, das bei der Umsetzung von Vinyltrichlorsilan und Methanol anfällt, erhalten kann [Nagel et al., Journal of Organic Chemistry, Band XVI (1951), Teil 2, 1768 - 1771].

EP 0 518 057 A1 offenbart ein Verfahren zur Herstellung solcher Gemische kettenförmiger und cyclischer Siloxanoligomerer. Dabei werden entsprechende Organoalkoxysilane mit unterschiedlichen Substituenten unter Zusatz von HCI als Katalysator und einer definierten Menge Wasser gezielt hydrolysiert, kondensiert bzw. cokondensiert, wobei der Katalysator und der freie Alkohol im Anschluss an die Umsetzung wieder aus dem Produktgemisch entfernt wird. Sofern man Alkoxysilane mit verschiedenen organofunktionellen Gruppen einsetzt, ist erwünscht, eine möglichst gleichmäßige, d. h. statistische Verteilung der verschiedenen Substituenten in den resultierenden Siloxanoligomeren zu erhalten. Dabei wird ein molares Verhältnis von Vinyl- zu Alkoxy-Substituenten von 1 : 1 bis 1 : 8 und ein molares Verhältnis von Vinyl- zu Alkyl-Substituenten von 1 : 0 bis 1 : 8 angestrebt, wobei pro Siliciumatom im Siloxan höchstens ein Vinyl-Substituent auftritt.

Weiterhin offenbart EP 1205505 A2 ein kontinuierliches Verfahren zur Herstellung eines Gemischs kettenförmiger und cyclischer Organoalkoxysiloxane ausgehend von entsprechenden Organochlorsilanen.

Dies alles ist schwierig zu steuern, da hydrolysierbare Organosilane, die verschiedene organofunktionelle Gruppen tragen, bekanntlich ein deutlich unterschiedliches Hydrolyse- und Kondensationsverhalten besitzen. Darüber hinaus sind Organoalkoxysilane hochpreisige Einsatzstoffe.

Der vorliegenden Erfindung lag somit die Aufgabe zugrunde, ein weiteres Verfahren zur Herstellung organofunktioneller Alkoxysiloxangemische, insbesondere Vinylfunktioneller oder Alkyl-/Vinyl-funktioneller bzw. entsprechender Aryl-funktioneller Alkoxysiloxane, bereitzustellen.

Die Aufgabe wird erfindungsgemäß entsprechend den Angaben der Patentansprüche gelöst.

Überraschenderweise wurde gefunden, dass Gemische kettenförmiger und cyclischer Siloxane bzw. Siloxanoligomerer, insbesondere Vinyl-funktionelle, Aryl-funktionelle, Alkyl-/Vinyl-funktionelle, Aryl-/Vinyl-funktionelle, Alkyl-/Aryl-funktionelle sowie Vinyl-/Alkyl-/Aryl-funktionelle Alkoxysiloxangemische, oder entsprechende Abmischungen aus mindestens zwei der zuvor genannten organofunktionellen Alkoxysiloxangemische, in besonders einfacher und wirtschaftlicher Weise aus den Chlorsilanen durch gezielten Wasser- und Alkoholzusatz, insbesondere ohne den Zusatz eines zusätzlichen Katalysators, herstellbar sind und man darüber hinaus auch insbesondere durch gezieltes Mischen so erhaltener organofunktionelle Alkoxysiloxangemische Abmischungen mit ganz speziell eingestellten Anwendungseigenschaften herstellen kann. Von besonderem Vorteil ist auch die im Wesentlichen einstufige Reaktion. Die Hydrolyse, Veresterung und Kondensation bzw. Cokondensation der Chlorsilane zu dem gewünschten Siloxanoligomerengemisch erfolgt in der Regel in situ. Chlorsilane sind deutlich preisgünstiger als die entsprechenden Alkoxysilane. Ferner entfällt der Zusatz eines Katalysators. Daher ist das vorliegende Verfahren einfach und in Summe besonders wirtschaftlich.

Gegenstand der vorliegenden Erfindung ist daher ein Verfahren zur Herstellung eines Gemischs kettenförmiger und cyclischer Siloxane der allgemeinen Formel I

R₃Si-O-[SiR₂-O-]ₘSiR₃ (I)

und cyclischer Siloxane der allgemeinen Formel II 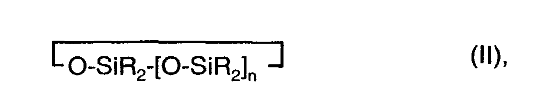 wobei in den vorangehenden Formeln m eine ganze Zahl von 0 bis 40, vorzugsweise 1 bis 20, besonders bevorzugt 3 bis 6, und n eine ganze Zahl von 2 bis 40, vorzugsweise 2 bis 20, sind, Gruppen R gleich oder verschieden sind, R für eine organofunktionelle Gruppe aus der Reihe Alkyl, vorzugsweise eine lineare, verzweigte oder cyclische Alkylgruppe mit 1 bis 18 C-Atomen, Vinyl, Aryl mit 6 bis 18 C-Atomen, vorzugsweise Phenyl, Tolyl oder Benzyl, oder Alkoxy, vorzugsweise Methoxy oder Ethoxy, steht und pro Siliciumatom höchstens eine Vinyl-Gruppe oder eine Aryl-Gruppe vorliegt,
welches durch eine gezielte Hydrolyse, Kondensation bzw. Cokondensation mindestens eines monomeren Silans in alkoholischer Lösung in Gegenwart eines sauren Katalysators erhalten wird,
wenn man (i) mindestens ein Arylchlorsilan oder (ii) ein Gemisch von mindestens zwei Chlorsilanen aus der Reihe Alkylchlorsilan und Arylchlorsilan, Arylchlorsilan und Vinylchlorsilan, Alkylchlorsilan und Vinylchlorsilan, Arylchlorsilan und Vinylchlorsilan und Alkylchlorsilan oder (iii) in zwei oder mehreren getrennten Ansätzen mindestens ein Chlorsilan einsetzt, unter Zusatz von Alkohol und Wasser umsetzt, d. h. gezielt hydrolysiert und kondensiert, und bezüglich (iii) mindestens zwei der jeweils erhaltenen Gemische zu einer Abmischung zusammengibt. Geeigneterweise erfolgt das gezielte Abmischen einzelner Gemische gemäß (iii) unter Rühren, wobei die jeweiligen Organoalkoxysiloxane auch zu multifunktionellen Organosiloxanen äquilibrieren können.

Beim erfindungsgemäßen Verfahren bevorzugt man als Chlorsilankomponente, insbesondere gemäß (iii), Tetrachlorsilan, Vinyltrichlorsilan, Vinylmethyldichlorsilan, Alkyltrichlorsilan, wie Methyltrichlorsilan, Ethyltrichlorsilan, n-Propyltrichlorsilan, i-Propyltrichlorsilan, i-Butyltrichlorsilan, n-Octyltrichlorsilan, i-Octyltrichlorsilan, Hexadecyltrichlorsilan, Octadecyltrichlorsilan, Alkylmethyldichlorsilane, wie Dimethyldichlorsilan, Methylpropyldichlorsilan, Cycloalkyltrichlorsilan sowie Cycloalkylmethyldichlorsilan, wie Cyclohexyltrichlorsilan, Cyclohexylmethyldichlorsilan, Phenylmethyldichlorsilan, Phenyltrichlorsilan, oder Gemische daraus.

Als Alkohol verwendet man beim erfindungsgemäßen Verfahren vorzugsweise Methanol, Ethanol, n-Propanol, i-Propanol, 2-Methoxyethanol oder eine Mischung daraus.

Zur Durchführung des erfindungsgemäßen Verfahrens setzt man pro Mol Chlorsilan 0,5 bis 1,5 Mol Wasser, vorzugsweise 0,6 bis 1,0 Mol Wasser, besonders bevorzugt 0,7 bis 0,9 Mol Wasser, ein. Gegebenenfalls kann man den Alkohol und die für die Hydrolyse und Kondensation bzw. Cokondensation bevorzugte Menge Wasser als Wasser/Alkohol-Gemisch einsetzen. Das Chlorsilan wird dann vorgelegt und das Wasser/Alkohol-Gemisch zudosiert.

Geeigneterweise setzt man beim erfindungsgemäßen Verfahren pro Mol Chlor im Chlorsilan 1 bis 1,5 Mol Alkohol, vorzugsweise 1,1 bis 1,3 Mol Alkohol, ein. Das Zusammengeben der Komponenten und die Durchführung der Umsetzung erfolgt üblicherweise unter guter Durchmischung.

Beim erfindungsgemäßen Verfahren führt man die Umsetzung bevorzugt bei einer Temperatur im Bereich von 20 bis 100 °C, vorzugsweise bei 50 bis 80 °C, durch, der Druck ist der Atmosphärendruck.

In der Regel ist die erfindungsgemäße Umsetzung der Chlorsilane nach 10 Minuten bis 5 Stunden, vorzugsweise nach 60 Minuten bis 2 Stunden, abgeschlossen.

Geeigneterweise entfernt man anschließend den freien Alkohol und den bei der Umsetzung entstandenen Chlorwasserstoff aus dem Produktgemisch. Das Entfernen des Alkohols und des Chlorwasserstoffs aus dem Produktgemisch erfolgt vorzugsweise destillativ unter vermindertem Druck.

Das erfindungsgemäße Verfahren kann man als kontinuierlich und diskontinuierlich geführten Prozess betreiben.

Im Allgemeinen führt man das erfindungsgemäße Verfahren derart durch, dass man das Chlorsilan in einem Rührkessel vorlegt, gegebenenfalls erwärmt und das Wasser in Form eines Wasser/Alkohol-Gemischs, z. B. Wasser/Methanol-Gemischs, zudosiert. Dabei finden eine Abspaltung von Chlorwasserstoff statt, der aus dem Reaktionskessel entweicht und in Wasser absorbiert wird. Nach Beendigung der Chlorwasserstoffentwicklung wird in der Regel noch einige Zeit weitergerührt und dann begonnen, durch Destillation überschüssige Alkoholmengen abzutrennen. Das danach vorliegende Produkt kann zur vollständigen Umsetzung der an den Siliciumatomen befindlichen Chlorgruppen mit einer Natriumalkoholat-Lösung in Alkohol, z.B. einer 30%igen Natriummethylat-Lösung in Methanol, neutralisiert werden. So sind nach dem erfindungsgemäßen Verfahren entsprechende organofunktionelle Alkoxysiloxangemische als Produkt erhältlich.
Weiterhin kann man wohl definierte Mengen von Gemischen, die wie zuvor beschrieben, jedoch getrennt von einander hergestellt werden, abmessen und in geeigneter Weise unter guter Durchmischung zusammenbringen.
Dabei weisen erfindungsgemäß erhaltene Alkoxysiloxangemische vorzugsweise multifunktionelle Organoalkoxysiloxane auf, wobei solche Siloxane des Gemischs bzw. der Abmischung gemäß Formel I oder II neben mindestens einer Alkoxygruppe mindestens eine weitere organofunktionelle Gruppe, vorzugsweise zwei weitere organofunktionelle Gruppen, gegebenenfalls drei weitere organofunktionelle Gruppen auf der Reihe Alkyl, Vinyl und Aryl tragen. D. h. solche Alkoxysiloxan-haltigen Gemische bzw. Abmischungen können beispielsweise Aryl-funktionelle kettenförmige sowie cyclische Alkoxysiloxane oder Alkyl-/Aryl-funktionelle kettenförmige sowie cyclische Alkoxysiloxane oder Aryl-/Vinyl-funktionelle kettenförmige sowie cyclische Alkoxysiloxane oder kettenförmige sowie cyclische Alkyl-/Aryl-/Vinyl-funktionelle Alkoxysiloxane enthalten.

Gegenstand der vorliegenden Erfindung sind somit auch Alkyl-funktionelle, Vinyl-funktionelle, Aryl-funktionelle, Alkyl-/Vinyl-funktionelle, Alkyl-/Aryl-funktionelle, Aryl-/Vinyl-funktionelle und/oder Alkyl-/Aryl-/Vinyl-funktionelle Alkoxysiloxan-haltige Gemische oder Abmischungen daraus, erhältlich nach dem erfindungsgemäßen Verfahren.

Das erfindungsgemäße Verfahren liefert in vorteilhafter Weise ein Produkt, d. h. ein Gemisch bzw. eine Abmischung kettenförmiger sowie cyclischer multiorganofunktioneller Siloxane mit hoher Reinheit, geringem Gehalt an Nebenprodukten, geringer Flüchtigkeit, hohem Flammpunkt und niedriger Viskosität.

Erfindungsgemäße Gemische kettenförmiger und cyclischer Siloxane bzw. Siloxanoligomerer sowie gezielt hergestellte Abmischungen daraus kann man in vorteilhafter Weise zur Behandlung einer anorganischen Oberfläche, für die Wasser abweisende oder Korrosion verhindernde oder haftvermittelnde Ausstattung von Metall oder Legierungen, wie Eisen, Stahl, Aluminium, Keramik, Kunststein, Glas, Baustoffen und Bauwerken oder Bauteilen, beispielsweise aus Beton, Gasbeton, Kalksandstein, Ziegel, Sandstein, für die Beschichtung von Glas- und Mineralfasern, als Bindemittel, als Zusatz zu Bindemitteln, für die Silanisierung von Füllstoffen, Flammschutzmitteln und Pigmenten, beispielsweise natürliche, gefällte oder pyrogene Kieselsäure, Silikate, Aluminiumoxid, Aluminiumhydroxid, Titanoxid, Eisenoxide, Magnesiumoxid, Gips, Kalk, Dolomit, Ammoniummeta-, Ammoniumortho-, Ammoniumpyro-, Ammoniumpolyphosphate, entsprechende Melaminphosphate, wie Melaminpyrophosphat, für die Verbesserung der rheologischen Eigenschaften von Dispersionen, als Haftvermittler, als Wasserfänger für Kleb- und Dichtstoffe, insbesondere solcher auf Basis von Silicon, silanterminierter Polyether, auch MS Polymer genannt, sowie silanterminierter Polyurethane, als Wasserfänger in Polymercompounds, wie vinylsilangepfropftes Polyolefin, sowie als Trennmittel, als Vernetzer, beispielsweise für alkoxyfunktionelle Silicone, sowie als Zusatzstoff für Farben und Lacke verwenden.

Die vorliegende Erfindung wird durch die nachfolgenden Beispiele näher erläutert:

### Beispiel 1

### Herstellung eines vinyl- und methoxygruppenhaltigen Oligosiloxans

In einen 2000-ml-Doppelmantel-Dreihalskolben, versehen mit Wasserkühler, Rührer, Thermometer und Tropftrichter wurden unter Stickstoffatmosphäre 807,5 g (5,0 Mol) Vinyltrichlorsilan eingefüllt. Über den Tropftrichter, dessen Zuleitungsrohr unter der Flüssigkeitsoberfläche des Chlorsilans endet, wurden zunächst 240,0 g Methanol (7,5 Mol, entspricht einem Drittel der zuzusetzenden Menge) bei Raumtemperatur innerhalb von 1 bis 2 Stunden zudosiert. Die Reaktionsmischung entwickelte sofort Chlorwasserstoff, der über den Kühler abgeleitet und in einem Auffanggefäß in Wasser absorbiert wurde. Die Temperatur der Reaktionsmischung stieg auf ca. 30 bis 35 °C.

In der nächsten Stufe wurde ein Methanol/Wasser-Gemisch, bestehend aus 480,0 g Methanol (15,0 Mol, 2/3 der zuzusetzenden Menge) und 72,0 g Wasser (4,0 Mol) so zudosiert, dass die Temperatur der Reaktionsmischung innerhalb von 3 bis 4 Stunden ca. 75 bis 80 °C erreichte. Nach beendeter Zugabe von Methanol/Wasser-Gemisch wurde 60 Minuten zum Rückfluss erhitzt. Der Reaktionsverlauf wurde durch die Bestimmung des Vinyltrichlorsilan-Gehalts mittels GC verfolgt.

Aus dem nach der vorstehenden Arbeitsweise erhaltenen Rohprodukt, das überschüssiges Methanol und Reste entstandenen Chlorwasserstoffs enthielt, wurde anschließend durch Destillation bei Normaldruck ein Methanol/Chlorwasserstoff-Gemisch abgetrennt. Die Ansatztemperatur stieg dabei auf 150 bis 155 °C. Nach der Abkühlung der Reaktionsmischung auf ca. 100°C wurde die Acidität des Produkts bzw. der Chlorid-Gehalt bestimmt. Bezogen auf den erhaltenen Chlorid-Wert wurde eine stöchiometrische Menge Natriummethanolat (als 30%ige methanolische Lösung) zugegeben und 15 Minuten gerührt. Danach wurde erneut der Chlorid-Gehalt bestimmt und gegebenenfalls nochmals methanolisches Natriummethanolat zugesetzt und erneut 15 Minuten gerührt. War der Chlorid-Gehalt kleiner als 10 mg/kg, wurde das Produkt auf Raumtemperatur abgekühlt und der restliche Methanolgehalt durch Vakuumdestillation entfernt (bis 30 hPa und 100 °C Produkttemperatur).

Als letzter Arbeitsschritt wurde das bei der Neutralisation mit Natriummethanolat entstandene Natriumchlorid über ein Filter aus dem Produkt entfernt.

Erhalten wurden 532,5 g (95,8 % d. Th.) vinyl- und methoxygruppenhaltiges Oligosiloxan mit folgenden Kennzahlen:

| | |
|---|---|
| SiO₂-Gehalt | 53,9 % (Masse) |
| Methanol | <0,1 % (Masse) |
| Farbzahl | 5 mg Pt-Co/l |

### Beispiel 2

### Herstellung eines vinyl- und ethoxygruppenhaltigen Oligosiloxans

In einen 2000-ml-Doppelmantel-Dreihalskolben, versehen mit Wasserkühler, Rührer, Thermometer und Tropftrichter wurden unter Stickstoffatmosphäre 807,5 g (5,0 Mol) Vinyltrichlorsilan eingefüllt. Über den Tropftrichter, dessen Zuleitungsrohr unter der Flüssigkeitsoberfläche des Chlorsilans endet, wurden zunächst 575,0 g Ethanol (12,5 Mol, entspricht 60 % der zuzusetzenden Menge) bei Raumtemperatur innerhalb von 2 bis 3 Stunden zudosiert. Die Reaktionsmischung entwickelte sofort Chlorwasserstoff, der über den Kühler abgeleitet und in einem Auffanggefäß in Wasser absorbiert wurde. Die Temperatur der Reaktionsmischung stieg auf ca. 35 bis 40 °C.

In der nächsten Stufe wurde ein Ethanol/Wasser-Gemisch, bestehend aus 391,0 g Ethanol (8,5 Mol, 40 % der zuzusetzenden Menge) und 72,0 g Wasser (4,0 Mol) so zudosiert, dass die Temperatur der Reaktionsmischung innerhalb von 3 bis 4 Stunden ca. 90 bis 95 °C erreichte. Nach beendeter Zugabe von Ethanol/Wasser-Gemisch wurde 60 Minuten zum Rückfluss erhitzt. Der Reaktionsverlauf wurde durch die Bestimmung des Vinyltrichlorsilan-Gehalts mittels GC verfolgt.

Nach der im Beispiel 1 ausführlich beschriebenen Aufarbeitung des Reaktionsgemischs mittels Destillation und nachfolgender Neutralisation mit alkoholischer Natriumalkoholatlösung (hier ethanolische Natriumethanolat-Lösung) wurden 619,3 g (94,7 % d. Th.) vinyl- und ethoxygruppenhaltiges Oligosiloxan mit folgenden Kennzahlen erhalten:

| | |
|---|---|
| SiO₂-Gehalt | 45,2 % (Masse) |
| Ethanol | <0,1 % (Masse) |
| Farbzahl | <5 mg Pt-Co/I |

### Beispiel 3

### Herstellung eines vinyl-, propyl- und ethoxygruppenhaltigen Oligosiloxans

In einen 2000-ml-Doppelmantel-Dreihalskolben, versehen mit Wasserkühler, Rührer, Thermometer und Tropftrichter wurden unter Stickstoffatmosphäre 403,8 g (2,5 Mol) Vinyltrichlorsilan und 421,6 g (2,375 Mol) Propyltrichlorsilan eingefüllt und vermischt. Über den Tropftrichter, dessen Zuleitungsrohr unter der Flüssigkeitsoberfläche des Chlorsilans endet, wurden zunächst 575,0 g Ethanol (12,5 Mol, entspricht 60 % der zuzusetzenden Menge) bei Raumtemperatur innerhalb von 2 bis 3 Stunden zudosiert. Die Reaktionsmischung entwickelte sofort Chlorwasserstoff, der über den Kühler abgeleitet und in einem Auffanggefäß in Wasser absorbiert wurde. Die Temperatur der Reaktionsmischung stieg auf ca. 35 bis 40 °C.

In der nächsten Stufe wurde ein Ethanol/Wasser-Gemisch, bestehend aus 402,5 g Ethanol (8,75 Mol, 40 % der zuzusetzenden Menge) und 70,2 g Wasser (3,9 Mol) so zudosiert, dass die Temperatur der Reaktionsmischung innerhalb von 3 bis 4 Stunden ca. 90 bis 95 °C erreicht. Nach beendeter Zugabe von Ethanol/Wasser-Gemisch wurde 60 Minuten zum Rückfluss erhitzt. Der Reaktionsverlauf wurde durch die Bestimmung des Vinyltrichlorsilan-Gehalts mittels GC verfolgt.

Nach der im Beispiel 1 ausführlich beschriebenen Aufarbeitung des Reaktionsgemischs mittels Destillation und nachfolgender Neutralisation mit alkoholischer Natriumalkoholatlösung (hier ethanolische Natriumethanolat-Lösung) wurden 641,2g (94,9% d. Th.) vinyl-, propyl- und ethoxygruppenhaltiges Oligosiloxan mit folgenden Kennzahlen erhalten:

| | |
|---|---|
| SiO₂-Gehalt | 41,1 % (Masse) |
| Ethanol | <0,1 % (Masse) |
| Farbzahl | 5 mg Pt-Co/I |

### Beispiel 4

### Herstellung eines vinyl- und methoxygruppenhaltigen Oligosiloxans

In einen 2000-ml-Doppelmantel-Dreihalskolben, versehen mit Wasserkühler, Rührer, Thermometer und Tropftrichter wurden unter Stickstoffatmosphäre 242,3 g (1,5 Mol) Vinyltrichlorsilan und 765,0 g (4,5 Mol) Tetrachlorsilan eingefüllt und vermischt. Über den Tropftrichter, dessen Zuleitungsrohr unter der Flüssigkeitsoberfläche des Chlorsilans endet, wurden zunächst 576,0 g Methanol (18,0 Mol, entspricht 2/3 der zuzusetzenden Menge) bei Raumtemperatur innerhalb von 1 bis 2 Stunden zudosiert. Die Reaktionsmischung entwickelte sofort Chlorwasserstoff, der über den Kühler abgeleitet und in einem Auffanggefäß in Wasser absorbiert wurde. Die Temperatur der Reaktionsmischung stieg auf ca. 30 bis 35 °C.

In der nächsten Stufe wurde ein Methanol/Wasser-Gemisch, bestehend aus 288,0 g Methanol (9,0 Mol, 1/3 der zuzusetzenden Menge) und 86,4 g Wasser (4,8 Mol) so zudosiert, dass die Temperatur der Reaktionsmischung innerhalb von 3 bis 4 Stunden ca. 75 bis 80 °C erreicht. Nach beendeter Zugabe von Methanol/Wasser-Gemisch wurde 60 Minuten zum Rückfluss erhitzt. Der Reaktionsverlauf wurde durch die Bestimmung des Vinyltrichlorsilan-Gehalts mittels GC verfolgt.

Nach der im Beispiel 1 ausführlich beschriebenen Aufarbeitung des Reaktionsgemischs mittels Destillation und nachfolgender Neutralisation mit alkoholischer Natriumalkoholatlösung (hier methanolische Natriummethanolat-Lösung) wurden 664,0 g (96,9 % d. Th.) vinyl- und methoxygruppenhaltiges Oligosiloxan mit folgenden Kennzahlen erhalten:

| | |
|---|---|
| SiO₂-Gehalt | 52,9 % (Masse) |
| Methanol | <0,1 % (Masse) |
| Farbzahl | <5 mg Pt-Co/I |

### Beispiel 5

### Herstellung eines vinyl-, methoxy- und ethoxygruppenhaltigen Oligosiloxans

In einen 2000-ml-Doppelmantel-Dreihalsglaskolben, versehen mit Wasserkühler, Rührer und Thermometer wurden 720 g des nach Beispiel 1 erhaltenen vinyl- und methoxygruppenhaltigen Oligosiloxans mit 585 g des nach Beispiel 2 erhaltenen vinyl- und ethoxygruppenhaltigen Oligosiloxans durch Erwärmen unter Rühren auf 60°C miteinander vermischt.

Das so erhaltene Oligomerengemisch zeichnet sich durch eine abgestufte Reaktivität gegenüber z. B. Füllstoffoberflächen aus. Je nach Art dieser Oberflächen kann durch Mischen der erfindungsgemäßen Oligosiloxane nach der hier beschriebenen Methode die gewünschte Silanisierung eingestellt werden.

| | |
|---|---|
| SiO₂-Gehalt | 50,0 %(Masse) |
| Methanol | <0,1 %(Masse) |
| Ethanol | < 0,1 %(Masse) |
| Farbzahl | < 5 mg Pt-Co/l |

## Patentansprüche

1. Verfahren zur Herstellung eines Gemischs kettenförmiger und cyclischer Siloxane der allgemeinen Formel I
R₃Si-O-[SiR₂-O-]ₘSiR₃ (I)
und cyclischer Siloxane der allgemeinen Formel II 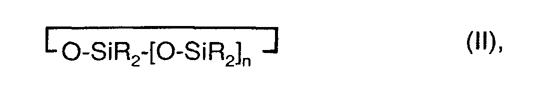 worin m eine ganze Zahl von 0 bis 40 und n eine ganze Zahl von 2 bis 40 sind, Gruppen R gleich oder verschieden sind, R für eine organofunktionelle Gruppe aus der Reihe Alkyl, Aryl, Vinyl oder Alkoxy steht und pro Siliciumatom höchstens eine Vinyl- oder Aryl-Gruppe vorliegt,
welches durch eine gezielte Hydrolyse, Kondensation oder Cokondensation mindestens eines monomeren Silans in alkoholischer Lösung in Gegenwart eines sauren Katalysators erhalten wird,
wobei man
(i) mindestens ein Arylchlorsilan oder
(ii) ein Gemisch von mindestens zwei Chlorsilanen gemäß Alkylchlorsilan und Arylchlorsilan, Arylchlorsilan und Vinylchlorsilan, Alkylchlorsilan und Vinylchlorsilan, Arylchlorsilan und Vinylchlorsilan und Alkylchlorsilan oder
(iii) in zwei oder mehreren getrennten Ansätzen mindestens eine Chlorsilankomponente einsetzt, unter Zusatz von Alkohol und Wasser umsetzt,
und bezüglich (iii) mindestens zwei der jeweilig erhaltenen Gemische kettenförmiger und cyclischer Siloxane zusammenbringt.

2. Verfahren nach Anspruch 1,
**dadurch gekennzeichnet,**
**dass** man als Chlorsilankomponente Tetrachlorsilan, Vinyltrichlorsilan, Vinylmethyldichlorsilan, Alkyltrichlorsilan, Alkylmethyldichlorsilan, Phenylmethyldichlorsilan, Phenyltrichlorsilan, Cycloalkyltrichlorsilan, Cycloalkylmethyldichlorsilan oder Gemische daraus einsetzt.

3. Verfahren nach Anspruch 1 oder 2,
**dadurch gekennzeichnet,**
**dass** man als Alkohol Methanol, Ethanol, n-Propanol, i-Propanol, 2-Methoxyethanol oder eine Mischung daraus verwendet.

4. Verfahren nach mindestens einem der Ansprüche 1 bis 3,
**dadurch gekennzeichnet,**
**dass** man pro Mol Chlorsilan 0,5 bis 1,5 Mol Wasser einsetzt.

5. Verfahren nach mindestens einem der Ansprüche 1 bis 4,
**dadurch gekennzeichnet,**
**dass** man pro Mol Chlor im Chlorsilan 1 bis 1,5 Mol Alkohol einsetzt.

6. Verfahren nach mindestens einem der Ansprüche 1 bis 5,
**dadurch gekennzeichnet,**
**dass** man die Umsetzung bei einer Temperatur im Bereich von 20 bis 100°C durchführt.

7. Verfahren nach mindestens einem der Ansprüche 1 bis 6,
**dadurch gekennzeichnet,**
**dass** man den freien Alkohol und den bei der Umsetzung entstandenen Chlorwasserstoff aus dem Produktgemisch entfernt.

8. Verfahren nach mindestens einem der Ansprüche 1 bis 7,
**dadurch gekennzeichnet,**
**dass** man den Prozess kontinuierlich und diskontinuierlich betreibt.

9. Alkyl-funktionelle, Vinyl-funktionelle, Aryl-funktionelle, Alkyl-/Vinyl-funktionelle, Alkyl-/Aryl-funktionelle, Aryl-/Vinyl-funktionelle und/oder Alkyl-/Aryl-/Vinylfunktionelle Alkoxysiloxan-haltige Gemische oder Abmischungen daraus erhältlich nach einem der Ansprüche 1 bis 8.

10. Gemische oder Abmischungen von Gemischen nach Anspruch 9, wobei ein Gemisch kettenförmiger und cyclischer Siloxane der allgemeinen Formel I und/oder II als funktionelle Gruppen im Wesentlichen a) Aryl- und Alkoxy-Gruppen oder b) Vinyl-, Aryl- und Alkoxy-Gruppen oder c) Aryl-, Alkyl- und Alkoxy-Gruppen oder d) Aryl-, Vinyl-, Alkyl- und Alkoxy-Gruppen enthält oder eine Abmischung auf mindestens zwei, auf getrenntem Wege hergestellte Gemische kettenförmiger und cyclischer Organosiloxane gemäß Formel I und/oder II sowie gegebenenfalls deren Folgeprodukte basiert.

11. Verwendung eines Gemischs kettenförmiger und cyclischer Siloxane oder einer Abmischung daraus erhalten nach einem der Ansprüche 1 bis 10 zur Behandlung einer anorganischen Oberfläche, für die Wasser abweisende oder Korrosion verhindernde oder haftvermittelnde Ausstattung von Metall, Legierungen, Keramik, Kunststein, Glas, Baustoffen und Bauwerken, für die Beschichtung von Glas- und Mineralfasem, als Bindemittel, als Zusatz zu Bindemitteln, für die Silanisierung von Füllstoffen, Flammschutzmitteln und Pigmenten, für die Verbesserung der rheologischen Eigenschaften von Dispersionen, als Haftvermittler, als Wasserfänger für Kleb- und Dichtstoffe, als Wasserfänger in Polymercompounds, als Trennmittel, als Vernetzer sowie als Zusatzstoff für Farben und Lacke.
